# EUROPEAN PATENT SPECIFICATION

(11) **EP 4 025 507 B1**
(45) Date of publication and mention of the grant of the patent: **26.07.2023**
(21) Application number: 20765377.5
(22) Date of filing: 28.08.2020
(51) Int. Cl.: B65B 23/06, B65G 23/30

(54) **PACKAGING DEVICE FOR PACKAGING EGGS**
VERPACKUNGSVORRICHTUNG ZUM VERPACKEN VON EIERN
DISPOSITIF D'EMBALLAGE DESTINÉ À EMBALLER DES OEUFS

(30) Priority: 06.09.2019 NL 2023787
(43) Date of publication of application: 13.07.2022
(73) Proprietor: Moba B.V., 3771 VE Barneveld (NL)
(72) Inventor: GROOTHERDER, Berend Derk, 6971 LG Brummen (NL)
(74) Representative: V.O.
(86) International application number: PCT/NL2020/050530
(87) International publication number: WO 2021/045613

(56) References cited:
- EP-A1- 0 512 585
- EP-A1- 2 781 458
- EP-B1- 0 512 585

## Description

The present invention relates to a packaging device for packaging eggs (see e.g. EP 2 781 458 A1). Such devices are known in the prior art. In these, eggs are conveyed to the packaging device via a conveying system of a battery cage. There, the eggs are conveyed with a number of eggs in a juxtaposed arrangement to a packaging device via an endless conveyor and placed in a packaging via a carrier device. The number of eggs which are juxtaposed on the conveyor corresponds to the number of compartments in the respective packaging. Known roller conveyors have rollers whose diameter varies. The eggs are in each case situated between two rollers at the locations where the diameter is smallest. Both with table eggs and hatching eggs, the orientation of the eggs in a packaging matters. For table eggs, it is important that the eggs are packaged points down in order to center the egg yolks. If a hatching egg is not oriented correctly, it is not even possible to hatch it in an incubator. With known packaging devices, the eggs are oriented in a preferred direction on the roller conveyor comprising an endless series of mutually spaced-apart rollers, referred to in this document as endless roller conveyor for short. However, it is difficult to achieve a 100% reliable orientation at the speeds at which eggs are supplied to the roller conveyor. It is known to perform an additional orientation step when transferring the eggs from the roller conveyor to a packaging.

With a known packaging device, silicone discs are above and near the reverse side of the roller conveyor. The rollers rotate along virtually the entire conveyor track. However, near the reverse side, the rotation is stopped. In use, the silicone discs are situated in the path of the eggs. Passing eggs are engaged by the silicone discs, so that their points are directed in the direction of transport just before they fall off the roller conveyor, or they are dropped in an egg carrier, thus positioned with the points down.

With another known device, cams are provided on the underside of the conveyor track, near the reverse side of the roller conveyor, so that passing eggs are slightly lifted up by the cams. Above the conveyor track, pins are provided which turn the eggs the moment they are dropped from the roller conveyor, in order to position them points down.

A significant drawback of the known devices is the fact that the features for orienting the eggs are completely static. As a result thereof, the effect which such a feature has on an egg depends on the dimensions of the respective egg. In other words, the known devices are not suitable for correctly and reliably positioning differently sized eggs points down. In practice, the known devices therefore only achieve correct positioning points down with 70-90% of the eggs.

It is therefore an object of the present invention to provide a packaging device which offers a more reliable positioning of eggs points down than known packaging devices. To this end, the invention provides a packaging device according to claim 1. In this document, the term reverse side is understood to refer to a bend at the end of the actual conveyor track, where the direction of transport of the interconnected rollers is reversed and where the eggs are dropped from the roller conveyor. When using the packaging device, the roller conveyor transports eggs in the direction of the carrier device. The rollers are preferably connected to each other at the ends by a driven conveying chain and are preferably provided with teeth which, in use, are engaged by gear racks which are situated on either side of the conveyor track, as a result of which the rollers rotate when the roller conveyor is set in motion. When two rollers approach the reverse side of the roller conveyor, the rollers continue to rotate, the speed of the roller conveyor is temporarily increased and eggs which are situated between the narrow sections of the two rollers are engaged by the egg lifters which lift the eggs by 0.5 mm to 3 mm. Due to the in the known asymmetric shape of the eggs, an egg remains in contact with the two rotating rollers carrying the respective egg by means of its point and the contact with the roller at the blunt end of the egg is lost. Thus, the point of the egg which remains in contact, at least longer than the blunt end of the egg, with the rotating rollers accelerates and the blunt end of the egg trails behind with respect to the point and the egg is directed with its point in the direction of transport, just before being dropped in an egg carrier. The egg carriers catch the eggs which are dropped from the roller conveyor with their points directed forwards and thus downwards and subsequently move the eggs to packagings which are situated under the egg carriers and are to be filled with eggs, in order to place them into those packagings. The rotation of the eggs, driven by the rollers, ensures a dynamic positioning points down and, due to the dynamics and interaction with the egg during the positioning points down, is less sensitive to variation in size of the eggs than the known devices. Thus, the object of the present invention is achieved.

In a preferred embodiment of the present invention, a narrow portion of the roller has an at least substantially constant diameter for a certain length, with the narrow portion being flanked by two portions having a gradually increasing diameter, viewed from the narrow portion. On the one hand, such a geometry provides a good rolling surface for eggs during transportation across the conveyor. The slanting portions keep eggs ordered across the width of the roller conveyor, inter alia with respect to the egg carriers where they are dropped from the roller conveyor. In addition, the slanting portions are suitable for engaging and rotating eggs just before they are dropped into egg carriers in order to achieve said position points down.

The narrow portion preferably extends along a length, viewed in the longitudinal direction of the roller, situated in the range from 25 to 35 mm, preferably from 28 to 32 mm, so that eggs for chicken eggs of standard size can be carried by the rollers. The angle of inclination of the slanting portions is preferably between 7 and 35 degrees, more preferably between 12 and 25 degrees, still more preferably between 15 and 20 degrees, to ensure satisfactory engagement with an egg when the respective egg is lifted up by a cam. If desired, other dimensions may be used for processing eggs of other animals.

The rollers are preferably made of plastic, preferably having a low coefficient of friction. HMPE is a very suitable material, for example. Not only because a roller made of HMPE can impart the appropriate acceleration to the points of eggs just before they are dropped. Also because egg white and egg yolk do not stick thereto, so that the rollers can easily be kept clean.

It is preferred if the diameter of the at least one transport roller is between 40 and 55, more preferably between 45 and 50 mm. A diameter situated in the range mentioned facilitates the orientation of eggs during the passage towards the drop. This results in the eggs being oriented correctly with respect to the egg carriers which collect the dropped eggs. The transport roller preferably has 12 teeth x ½".

In a preferred embodiment, the driving wheel has the shape of a polygon, preferably a triangle, with rounded corners. Such a shape enables the driving wheel to drive the transport roller and thus the roller conveyor at variable speed, without having to control the varying speed electronically. The mechanical drive makes the device less susceptible to failures than an electronic drive.

It is preferred if the carrier device is designed as a plurality, preferably between three and twelve, more preferably six, egg carriers, each comprising two egg carriers which can be moved away from each other and towards each other in a reciprocating manner. In this case, the plurality is adapted to the packaging in which the eggs are to be packed. The number of egg carriers preferably corresponds to the number of narrow sections of the rollers.

In or near the first position of the carrier device, an egg carrier is in a collecting position which is closed towards the bottom. Egg carriers usually comprise two mutually movable parts, each of which partly corresponds to the contour of an egg shell. At the top, the parts move apart in order to collect an egg which was dropped from the roller conveyor and then move together again in order to hold the egg in a reliable manner while it is being moved towards a packaging. The parts of the egg carriers also move in the width direction, in which case they are relatively far apart in the collecting position, corresponding to the positions of the narrow parts of the rollers. In the position in which they place eggs in a packaging, they are relatively close together, corresponding to the recesses in a packaging, in which recesses the eggs are to be placed.

An egg carrier comprises a longitudinal axis which, at least in the situation in which the egg carrier is positioned to collect an egg which was dropped from the roller conveyor, extends at an angle of preferably 10 to 30 degrees, more preferably 15 to 25 degrees with respect to the vertical direct the egg conveyor. As a result thereof, it is ensured that a dropped egg is reliably collected and the positioning point down is maintained, or at least optimized.

In or near the second position of the carrier device, an egg carrier is preferably in a carrying position which is open towards the bottom. In this case, the movable parts open in order to place an egg from the egg carrier in a packaging.

It is preferred if an egg lifter is provided with a spherical top side, preferably corresponding to a sphere having a diameter situated in the range from 8 to 12 mm, more preferably from 9 to 11 mm. The spherical top side preferably has a radius R5 and provides a contact surface for eggs, as a result of which the eggs are lifted gradually. In addition, such a contact surface offers flexibility, in the sense that it is suitable for lifting eggs of different diameters, provided they are correctly positioned with respect to the conveyor track.

Alternatively, the top side of an egg lifter is provided with a slanting surface, preferably having a slope at an angle with respect to the horizontal situated in the range from 20 to 40 degrees, more preferably from 25 to 35 degrees. Such a contact surface for the eggs has advantages which are similar to those of the abovementioned spherical contact surface.

The present invention will be explained in more detail with reference to a preferred embodiment of a packaging device according to the present invention which is illustrated in the attached drawing, in which:
Fig. 1 shows a perspective view of a packaging machine 1 for packaging eggs according to the present invention;
Fig. 2 shows a perspective view of a roller conveyor from the packaging machine from Fig. 1;
Fig. 3 shows a front view of a roller for the roller conveyor from Fig. 2;
Fig. 4 shows a longitudinal section of a cam member which is incorporated in the roller conveyor from Fig. 2;
Figs. 5a-5c show three positions of eggs during operation of the roller conveyor from Fig. 2;
Fig. 6a shows a perspective view of the carrier device of the packaging device from Fig. 1;
Fig. 6b shows a perspective view of the part from Fig. 6a;
Fig. 6c shows a side view of an egg carrier from Figs. 6a and 6b.
Fig. 7a shows a perspective view of the interaction between the roller conveyor and the carrier device of the packaging machine from Fig. 1;
Fig. 7b shows a top view of the arrangement from Fig. 7a; and
Fig. 7c shows a vertical longitudinal section view along the line b-b from Fig. 7b;

In the figures, identical reference numerals always refer to the same elements. In order to avoid unnecessary repetition, the elements are not introduced again for every single figure.

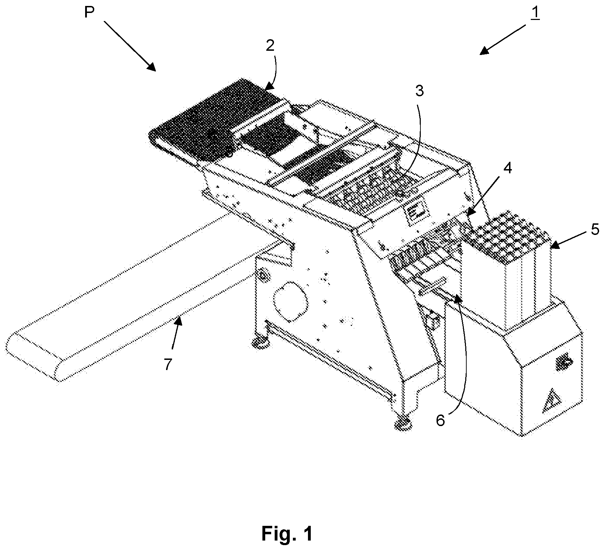

Fig. 1 shows a perspective view of a packaging machine 1 for packaging eggs according to the present invention. First, the operational principle of the packaging machine 1 will be discussed in general, following which the elements which are relevant to the invention will be explained in more detail. The packaging machine 1 has a supply belt 2 which is configured as an endless belt conveyor. Viewed in the direction of transport (arrow P), at the end of the supply belt 2, eggs are oriented, so that as many as possible are positioned points down when they are transferred to a roller conveyor 3. This orientation operation is not relevant for the purposes of the present invention. What is important is the fact that said orientation operation does not work perfectly, so that not all eggs on the roller conveyor 3 are positioned points down. Viewed in the direction of transport of the eggs, at the end of the roller conveyor 3, the eggs are dropped from the roller conveyor 3 and collected by a carrier device 4. The carrier device 4 transports the eggs downwards and then places them in one of the packagings 5 which the packaging belt 6 under the carrier device 4 transports to a discharge belt 7 which removes the packaged eggs.

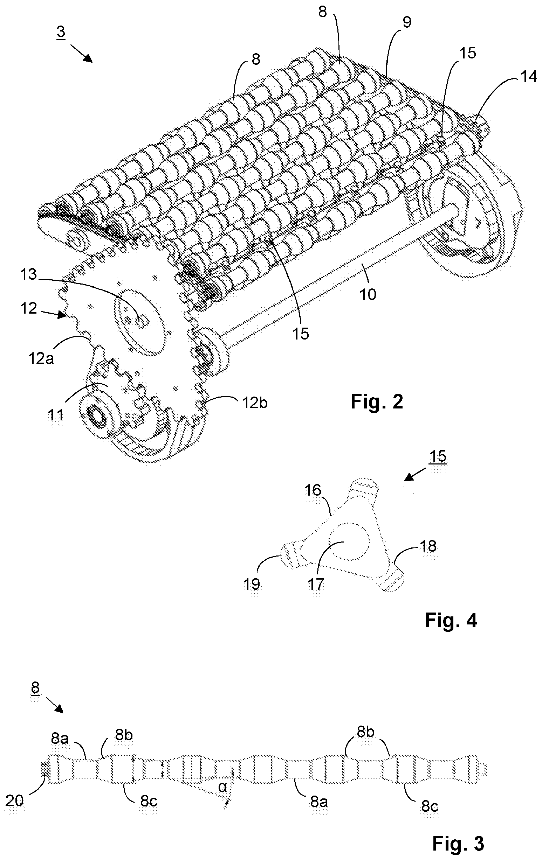

Fig. 2 shows a perspective view of a roller conveyor 3 of the packaging machine 1 from Fig. 1. The roller conveyor 3 is composed of a number of rollers 8 which are connected to each other in an endless series by an endless chain 9. A gear wheel 11 is attached to a drive shaft 10. Upon rotation of the drive shaft 10, gear wheel 11 co-rotates and in this case engages with a "triangular" gear wheel 12 forming a driving wheel. When the teeth of gear wheel 11 engage with teeth on one of the long sides 12a of gear wheel 12, gear wheel 12 rotates relatively slowly. When the teeth of gear wheel 11 engage with teeth on the corners 12b of gear wheel 12, gear wheel 12 rotates relatively quickly. Gear wheel 12 is attached to a chain drive shaft 13 and to chain gear wheels 14 which form two transport rollers and drive the chain 9 of the roller conveyor 3. Thus, an accelerated and decelerated rotation of the roller conveyor 3 is achieved in a mechanical way.

The rollers 8 of the roller conveyor extend parallel to each other and all have a characteristic shape, which is illustrated in Fig. 3. In this exemplary embodiment, the rollers 8 have six narrow portions 8a with a constant cross section which extend along a length of 29.5 mm which are flanked by slanting portions 8b. The slanting portions 8b extend on either side of a corresponding narrow portion 8a at an angle α with respect to the adjacent narrow portion 8a. Two neighboring slanting portions 8b associated with two neighboring narrow portions 8a are connected to each other by a widened portion 8c.

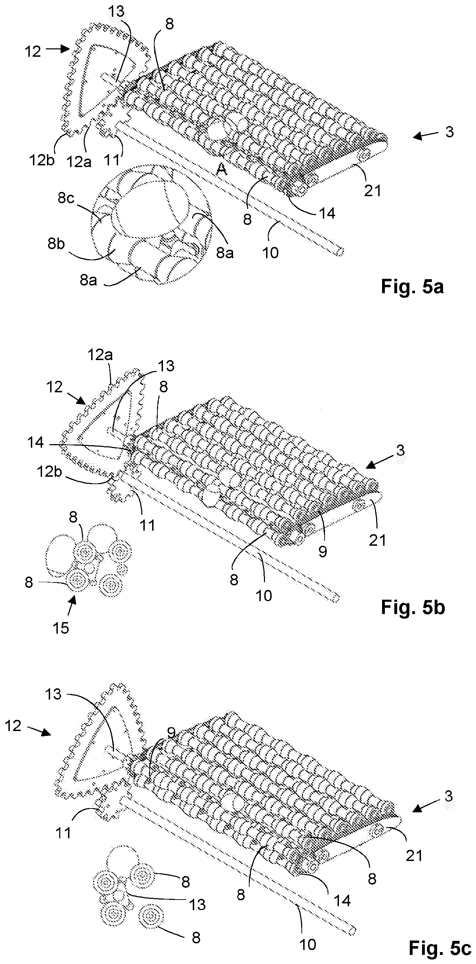

In this exemplary embodiment, six cam members 15 are attached to the chain drive shaft 13 of the roller conveyor 3. The number of cams, in this exemplary embodiment three, corresponds to the three sides of the gear wheel 12 forming driving wheel. The cam members 15 are each in a position on the chain drive shaft 13 which corresponds to a narrow portion 8a of the rollers 8 of the roller conveyor 3. Fig. 4 shows a longitudinal section of cam member 15. Cam member 15 has a body 16 in which a hole 17 is provided through which the chain drive shaft 13 which is connected thereto extends and which drives the cam member in rotation. Viewed from the center of the hole 17, three cams 18 which serve as egg lifters for the roller conveyor extend around the periphery of the body 16. Measured from the center of the hole 17, the cams extend up to 26 mm from that center. The cross section of the cams 18, in a transverse direction with respect to the length thereof, is round and has a diameter of 10 mm. The cams 18 are fitted to the chain drive shaft 13 in such a way that they substantially correspond to the corners of chain gear wheel 14 and that they always extend in a space between two neighboring rollers 8 when the triangular gear wheel 12 rotates. The cams have a rounded head 19 (R5) which extends so far into the space between two neighboring rollers 8 that an egg which is carried by the two neighboring rollers 8 is lifted 0.5 mm to 3 mm. This is explained in more detail below with reference to Fig. 5.

Figs. 5a-5c show three positions of eggs during operation of the roller conveyor from Fig. 2. In operation, an egg is situated in every open space between narrow portions 8a of two neighboring rollers 8. Figs. 5a-5c only show the transportation of two eggs for the purpose of explaining the invention. In reality, in operation, five times six eggs will be present between the six top rollers 5.

In Fig. 5a, two eggs are situated on the roller conveyor 3, at the point where the eggs are to be dropped in a carrier device (not shown in Fig. 5). The egg which is at the front, viewed in the direction of transport (arrow P), is referred to as the first egg, the other as the second egg. Teeth of gear wheel 11 of the drive shaft 10 engage with a side 12a of triangular gear wheel 12. In this way, the rollers 8 move forwards in the direction of transport (arrow P) at a first, relatively low, speed. At one end (see 20 in Fig. 3), the rollers are provided with teeth. By means of these teeth, the roller 8 rolls over a gear rack (not shown) which is provided on the inside of mounting plate 21 for this purpose. As a result, the rollers 8 rotate about their axis when the rollers 8 move in the direction of transport.

The detail view from Fig. 5a shows that a cam 18 from cam member 15 slightly lifts the first egg, as a result of which the point of the first egg is in contact with the slanting portion 8b of the two rollers 8 which carry the egg. The blunt end of the first egg is not in contact with the rollers 8. Due to the fact that the rollers 8 rotate continuously when moving, as has been explained above, the point of the first egg is directed forwards, that is to say in the direction of transport. The second egg is carried by two narrow portions 8a of the respective rollers 8 in such a way that its longitudinal axis runs parallel to the axis of the rollers 8. Because these rollers 8 rotate as well, the egg turns about its longitudinal axis during transportation.

Fig. 5b shows the situation shortly after the situation which is shown in Fig. 5a. In Fig. 5b, the second egg is at the point where it is dropped into the carrier device (not shown). Teeth of gear wheel 11 of the drive shaft 10 engage with a corner 12b of triangular gear wheel 12. In this way, the rollers 8 move forward in the direction of transport (arrow P) at a second, relatively high, speed. By means of these teeth, the roller 8 still rolls over the gear rack (not shown). Due to the relatively high speed with which the rollers 8 move in the direction of transport, the rollers 8 also rotate about their axis at an increased speed. The acceleration of the forward movement of the rollers 8 and the acceleration of their rotation ensures that the first egg is dropped from the roller conveyor 8 with its point facing downwards. This can clearly be seen in the detail view from Fig. 5b. It can also be seen that the second egg is carried by two rollers 8 and is about to be engaged by cam 18.

Fig. 5c shows the situation shortly after the situation which is shown in Fig. 5b. The first egg has dropped from the roller conveyor 13 and the second egg has just been engaged by cam 18.

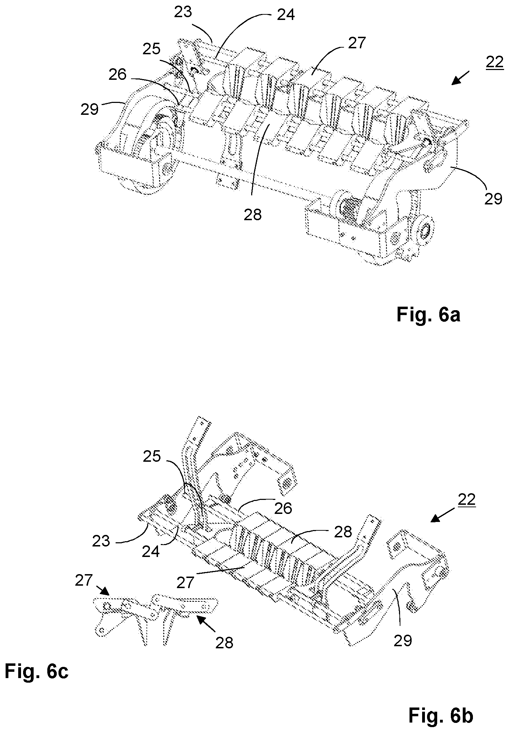

Fig. 6a shows a perspective view of the carrier device 22 of the packaging device 1 from Fig. 1. Six first carrier members 27 and six second carrier members 28, which together form six egg carriers, are arranged so as to be displaceable along axles 23 and 24, and 25 and 26, respectively. In Fig. 6a, the six first carrier members 27 as well as the six second carrier members 28 are arranged at a mutual distance apart. The positions of the carrier members 27, 28 correspond to the positions of the narrow sections 8a of the rollers 8 of the roller conveyor 3, and thus to the positions at which eggs are dropped from the roller conveyor 3. In Fig. 6a, each pair of a first 27 and corresponding second 28 carrier member is oriented with respect to each other in such a way that the mutual distance is relatively large at the top and that the carrier members 27, 28 at the bottom are close together in order to ensure that an egg which is collected by the first 27 and second 28 carrier member is carried by the carrier members 27, 28.

The carrier device 22 is displaceable in its entirety between a first, high, position which corresponds to Fig. 6a for collecting eggs dropped from a roller conveyor 3 and a second, lower, position for placing the eggs in a packaging. Axles 23 and 26 are arranged so as to be displaceable with respect to axle 24 and axle 25, respectively, so that the first 27 and second carrier members 28, respectively, tilt when the axles 23, 24 and 25, 26, respectively, are mutually displaced. Fig. 6b and 6c shows a perspective view of a part of the carrier device 22 from Fig. 6a in the second position. Compared to Fig. 6a, the axles 23 and 26 are tilted with respect to axles 24 and 25, respectively, in this position of the carrier device 22. The bottom sides of the carrier members 27 and 28, respectively, are moved apart, so that an egg which is situated between a first carrier member 27 and correspond second carrier member 28 can pass between the respective carrier members 27, 28 and can be placed in a packaging. The situation of the carrier members is shown in detail in a side view in Fig. 6c.

Compared to the situation in Fig. 6a, the carrier members 27, 28 are moved towards each other over the axles 23, 24, 25, 26. The first 27 and the second 28 carrier members are moved towards each other. In this arrangement, the position of the carrier members 27, 28 corresponds to the locations at which eggs have to be placed in a packaging.

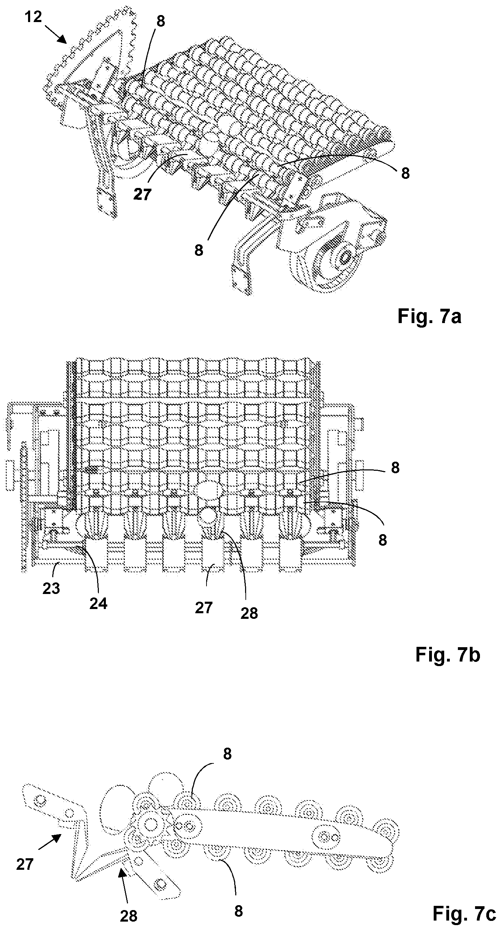

Figs. 7a-c show a perspective view and a top view and side view, respectively, of the cooperation between the roller conveyor 3 and the carrier device 22 of the packaging machine from Fig. 1. The situation in Fig. 7a corresponds to that which is shown in and described with reference to Figs. 5b and 6a. The first egg is just being dropped from the roller conveyor. The carrier device 22 is situated under the reverse side of the roller conveyor 3, with the carrier members 27, 28 in the position in which the bottom sides thereof block an egg from passing. The first egg thus falls from the roller conveyor 3 with its point directed downwards, as has already been described above, and is collected with its point still facing downwards by two carrier members 27, 28 which are situated under the roller conveyor.

In the figures and the description, the present invention is shown and described by means of only one embodiment. It will be clear that many modifications which may or may not be obvious to the person skilled in the art are conceivable without departing from the scope of protection which is defined in the following claims.

## Claims

1. A packaging device for packaging eggs, comprising:
a roller conveyor (3) with an endless series of mutually spaced-apart interconnected rollers (8), each having a longitudinal direction which is oriented in a transverse direction with respect to a direction of transport of a conveyor track of the roller conveyor, the rollers (8) comprising a profile of wide sections and narrow sections in the longitudinal direction, wherein the narrow sections are configured to carry eggs during transportation, wherein the endless series of rollers of the roller conveyor is wound around at least one transport roller on a reverse side;
a packaging conveyor (6) configured to supply packagings to be filled with eggs to under the reverse side of the roller conveyor and remove packagings filled with eggs; and
a carrier device (4, 22) positioned under the reverse side of the endless roller conveyor, comprising a plurality of in line and juxtaposed egg carriers which are provided in a transverse direction with respect to the direction of transport and which, in operation, in a first, relatively high position, collect eggs which are transported by the roller conveyor in the direction of transport to the carrier device, move them downwards in the direction of the packaging conveyor and then, in a second, relatively low position, place them in packagings which have been supplied by the packaging conveyor,
a drive device with a driving wheel (12), configured to drive the roller roller rotation means configured to cause each of the rollers (8) to rotate about a longitudinal axis directed in the longitudinal direction, at least when the roller conveyor is being driven,
egg lifters (15), provided in the conveyor track of the eggs and near the reverse side of the roller conveyor, always at the location of a center of each narrow section, in such a way that, in operation, an egg which approaches the reverse side of the roller conveyor track is engaged and lifted up slightly by an egg lifter when passing that egg lifter,
**characterised in that** said drive device with said driving wheel (12) is configured to drive the roller conveyor (3) at varying speed, in such a way that, in operation, the roller conveyor (3) accelerates before eggs are dropped in the egg carriers on the reverse side of the roller conveyor (3) and decelerates when the eggs are dropped from the roller conveyor (3).

2. The packaging device as claimed in the preceding claim, wherein a narrow portion (8a) of the roller (8) has an at least substantially constant diameter for a length in the longitudinal direction, with the narrow portion being flanked by two portions (8b) having a gradually increasing diameter, viewed from the narrow portion.

3. The packaging device as claimed in any of the preceding claims, wherein the narrow portion (8a) extends along a length situated in the range from 25-30mm, more preferably from 28-32 mm.

4. The packaging device as claimed in any of the preceding claims, wherein the rollers (8) are made of plastic, preferably of HMPE.

5. The packaging device as claimed in any of the preceding claims, wherein the diameter of the at least one transport roller (8) is between 40 and 55 mm, preferably between 45 and 50 mm.

6. The packaging device as claimed in any of the preceding claims, wherein the driving wheel (12) has the shape of a polygon, preferably a triangle with rounded corners.

7. The packaging device as claimed in any of the preceding claims, wherein the carrier device (4, 22) is designed as a plurality, preferably between three and twelve, more preferably six, egg carriers, each comprising two egg carriers which can be moved away from each other and towards each other in a reciprocating manner.

8. The packaging device as claimed in any of the preceding claims, wherein, in or near the first position of the carrier device (4, 22), an egg carrier is in a collecting position which is closed towards the bottom.

9. The packaging device as claimed in any of the preceding claims, wherein an egg carrier comprises a longitudinal axis, wherein the longitudinal axis of the egg carrier extends at an angle of preferably 10 to 30 degrees, preferably between 15 and 25 degrees, with respect to the vertical direct the egg conveyor.

10. The packaging device as claimed in any of the preceding claims, wherein, in or near the second position of the carrier device, an egg carrier is in a carrying position which is open towards the bottom.

11. The packaging device as claimed in any of the preceding claims, wherein an egg lifter is provided with a spherical top side, preferably corresponding to a sphere having a diameter situated in the range from 8 to 12 mm, preferably 9 to 11 mm, and a radius R5.

12. The packaging device as claimed in any of the preceding claims, wherein the top side of an egg lifter is provided with a slanting surface, preferably having a slope situated in the range from 20-40 degrees, more preferably from 25 to 35 degrees.

## Patentansprüche

1. Verpackungsvorrichtung zum Verpacken von Eiern, umfassend:
einen Rollenförderer (3) mit einer endlosen Reihe von gegenseitig beabstandeten, miteinander verbundenen Rollen (8), die jeweils eine Längsrichtung aufweisen, die in einer Querrichtung in Bezug auf eine Transportrichtung einer Förderbahn des Rollenförderers ausgerichtet ist, wobei die Rollen (8) ein Profil aus breiten Abschnitten und schmalen Abschnitten in der Längsrichtung aufweisen, wobei die schmalen Abschnitte so eingerichtet sind, dass sie Eier während des Transports tragen, wobei die endlose Reihe von Rollen des Rollenförderers um wenigstens eine Transportrolle auf einer Rückseite gewickelt ist;
einen Verpackungsförderer (6), der so eingerichtet ist, dass er mit Eiern zu füllende Verpackungen unter der Rückseite des Rollenförderers zuführt und mit Eiern gefüllte Verpackungen entfernt; und
eine Trägervorrichtung (4, 22), die unter der Rückseite des endlosen Rollenförderers positioniert ist und eine Vielzahl von hintereinander und nebeneinander angeordneten Eierträgern umfasst, die in einer Querrichtung in Bezug auf die Transportrichtung bereitgestellt sind und die im Betrieb in einer ersten, relativ hohen Position Eier, die von dem Rollenförderer in der Transportrichtung zu der Trägervorrichtung transportiert werden, sammeln, sie nach unten in Richtung des Verpackungsförderers bewegen und sie dann in einer zweiten, relativ niedrigen Position in Verpackungen legen, die von dem Verpackungsförderer zugeführt wurden,
eine Antriebsvorrichtung mit einem Antriebsrad (12), das so eingerichtet, dass es den Rollenförderer antreibt,
eine Rollenrotationseinrichtung, die so eingerichtet ist, dass sie bewirkt, dass jede der Rollen (8) sich um eine in Längsrichtung gerichtete Längsachse dreht, wenigstens wenn der Rollenförderer angetrieben wird,
Eierheber (15), die in der Rollenförderbahn der Eier und in der Nähe der Rückseite des Rollenförderers, immer an der Stelle einer Mitte jedes schmalen Abschnitts, bereitgestellt sind, so dass im Betrieb ein Ei, das sich der Rückseite der Rollenförderbahn nähert, von einem Eierheber erfasst und leicht angehoben wird, wenn es diesen Eierheber passiert,
**dadurch gekennzeichnet, dass** die Antriebsvorrichtung mit dem Antriebsrad (12) so eingerichtet ist, dass sie den Rollenförderer (3) mit variierender Geschwindigkeit antreibt, so dass der Rollenförderer (3) im Betrieb beschleunigt, bevor die Eier in die Eierträger auf der Rückseite des Rollenförderers (3) fallen, und verlangsamt, wenn die Eier vom Rollenförderer (3) fallen.

2. Verpackungsvorrichtung nach dem vorhergehenden Anspruch, wobei ein schmaler Abschnitt (8a) der Rolle (8) über eine Länge in Längsrichtung einen wenigstens im Wesentlichen konstanten Durchmesser aufweist, wobei der schmale Abschnitt von zwei Abschnitten (8b) flankiert wird, die, vom schmalen Abschnitt aus gesehen, einen allmählich zunehmenden Durchmesser aufweisen.

3. Verpackungsvorrichtung nach einem der vorhergehenden Ansprüche, wobei sich der schmale Abschnitt (8a) über eine Länge im Bereich von 25-30 mm, vorzugsweise von 28-32 mm, erstreckt.

4. Verpackungsvorrichtung nach einem der vorhergehenden Ansprüche, wobei die Rollen (8) aus Kunststoff, vorzugsweise aus HMPE, hergestellt sind.

5. Verpackungsvorrichtung nach einem der vorhergehenden Ansprüche, wobei der Durchmesser der wenigstens einen Transportrolle (8) zwischen 40 und 55 mm, vorzugsweise zwischen 45 und 50 mm, beträgt.

6. Verpackungsvorrichtung nach einem der vorhergehenden Ansprüche, wobei das Antriebsrad (12) die Form eines Polygons, vorzugsweise eines Dreiecks mit abgerundeten Ecken, aufweist.

7. Verpackungsvorrichtung nach einem der vorhergehenden Ansprüche, wobei die Trägervorrichtung (4, 22) als mehrere, vorzugsweise zwischen drei und zwölf, besonders bevorzugt sechs, Eierträger ausgebildet ist, die jeweils zwei voneinander weg und aufeinander zu bewegbare Eierträger umfassen, die hin und her bewegt werden können.

8. Verpackungsvorrichtung nach einem der vorhergehenden Ansprüche, wobei sich in oder in der Nähe der ersten Position der Trägervorrichtung (4, 22) ein Eierträger in einer nach unten geschlossenen Sammelposition befindet.

9. Verpackungsvorrichtung nach einem der vorhergehenden Ansprüche, wobei ein Eierträger eine Längsachse umfasst, wobei sich die Längsachse des Eierträgers in einem Winkel von vorzugsweise 10 bis 30 Grad, vorzugsweise zwischen 15 und 25 Grad, in Bezug auf die Vertikale erstreckt, die den Eierförderer leitet.

10. Verpackungsvorrichtung nach einem der vorhergehenden Ansprüche, wobei sich in oder in der Nähe der zweiten Position der Trägervorrichtung ein Eierträger in einer nach unten offenen Trageposition befindet.

11. Verpackungsvorrichtung nach einem der vorhergehenden Ansprüche, wobei ein Eierheber mit einer kugelförmigen Oberseite versehen ist, die vorzugsweise einer Kugel mit einem Durchmesser im Bereich von 8 bis 12 mm, vorzugsweise 9 bis 11 mm, und einem Radius R5 entspricht.

12. Verpackungsvorrichtung nach einem der vorhergehenden Ansprüche, wobei die Oberseite eines Eierhebers mit einer schrägen Fläche versehen ist, die vorzugsweise eine Neigung im Bereich von 20 bis 40 Grad, besonders bevorzugt von 25 bis 35 Grad, aufweist.

## Revendications

1. Dispositif d'emballage destiné à emballer des oeufs, comprenant :
un convoyeur à rouleaux (3) muni d'une suite sans fin de rouleaux (8) interconnectés espacés l'un de l'autre, ayant chacun une direction longitudinale qui est orientée dans une direction transverse par rapport à une direction de transport d'une piste de convoyeur du convoyeur à rouleaux, les rouleaux comprenant un profil à sections larges et sections étroites dans la direction longitudinale, les sections étroites étant configurées pour porter des oeufs durant le transport, la suite sans fin de rouleaux du convoyeur à rouleaux étant enroulée autour d'au moins un rouleau de transport sur un envers ;
un convoyeur d'emballages (6) configuré pour apporter des emballages à remplir d'oeufs jusqu'à sous l'envers du convoyeur à rouleaux et retirer des emballages remplis d'oeufs ; et
un dispositif de support (4, 22) positionné sous l'envers du convoyeur à rouleaux sans fin, comprenant une pluralité de supports d'oeuf alignés et juxtaposés qui sont disposés dans une direction transverse par rapport à la direction de transport et qui, en fonctionnement, dans une première position relativement haute, collectent des oeufs qui sont transportés par le convoyeur à rouleaux dans la direction de transport vers le dispositif de support, les déplacent vers le bas dans la direction du convoyeur d'emballages et ensuite, dans une seconde position relativement basse, les placent dans des emballages qui ont été apportés par le convoyeur d'emballages,
un dispositif d'entraînement muni d'une roue menante (12), configuré pour entraîner le convoyeur à rouleaux,
des moyens de rotation de rouleaux configurés pour faire tourner chacun des rouleaux (8) autour d'un axe longitudinal dirigé dans la direction longitudinale, au moins lorsque le convoyeur à rouleau est en train d'être entraîné,
des élévateurs d'oeuf (15), disposés dans la piste de convoyeur des œufs et près de l'envers du convoyeur à rouleaux, toujours à l'emplacement d'un centre de chaque section étroite, de telle manière que, en fonctionnement, un oeuf qui s'approche de l'envers de la piste de convoyeur à rouleaux entre en contact avec et soit légèrement levé par un élévateur d'oeuf lorsqu'il passe cet élévateur d'oeuf,
**caractérisé en ce que** ledit dispositif d'entraînement muni de ladite roue menante (12) est configuré pour entraîner le convoyeur à rouleaux (3) à vitesse variable, de telle manière que, en fonctionnement, le convoyeur à rouleaux (3) accélère avant que des œufs tombent dans les supports d'oeuf sur l'envers du convoyeur à rouleaux (3) et décélère lorsque les œufs tombent du convoyeur à rouleaux (3).

2. Dispositif d'emballage selon la revendication précédente, dans lequel une partie étroite (8a) du rouleau (8) a un diamètre au moins sensiblement constant sur une certaine longueur dans la direction longitudinale, la partie étroite étant flanquée par deux parties (8b) ayant un diamètre progressivement croissant, vu depuis la partie étroite.

3. Dispositif d'emballage selon n'importe laquelle des revendications précédentes, dans lequel la partie étroite (8a) s'étend sur d'une longueur incluse dans la plage de 25 à 30 mm, plus préférentiellement de 28 à 32 mm.

4. Dispositif d'emballage selon n'importe laquelle des revendications précédentes, dans lequel les rouleaux (8) sont faits de plastique, préférentiellement de HMPE.

5. Dispositif d'emballage selon n'importe laquelle des revendications précédentes, dans lequel le diamètre de l'au moins un rouleau de transport (8) est compris entre 40 et 55 mm, préférentiellement entre 45 et 50 mm.

6. Dispositif d'emballage selon n'importe laquelle des revendications précédentes, dans lequel la roue menante (12) a la forme d'un polygone, préférentiellement un triangle à coins arrondis.

7. Dispositif d'emballage selon n'importe laquelle des revendications précédentes, dans lequel le dispositif de support (4, 22) est conçu sous la forme d'une pluralité, préférentiellement entre trois et douze, plus préférentiellement six, supports d'oeuf, comprenant chacun deux supports d'oeuf qui peuvent être éloignés et rapprochés l'un de l'autre en va-et-vient.

8. Dispositif d'emballage selon n'importe laquelle des revendications précédentes, dans lequel, dans ou près de la première position du dispositif de support (4, 22), un support d'oeuf est dans une position de collecte qui est fermée vers le bas.

9. Dispositif d'emballage selon n'importe laquelle des revendications précédentes, dans lequel un support d'oeuf comprend un axe longitudinal, l'axe longitudinal du support d'oeuf s'étendant à un angle de préférentiellement 10 à 30 degrés, préférentiellement entre 15 et 25 degrés, par rapport à la direction verticale du convoyeur d'oeufs.

10. Dispositif d'emballage selon n'importe laquelle des revendications précédentes, dans lequel, dans ou près de la seconde position du dispositif de support, un support d'oeuf est dans une position de support qui est ouverte vers le bas.

11. Dispositif d'emballage selon n'importe laquelle des revendications précédentes, dans lequel un élévateur d'oeuf est pourvu d'un dessus sphérique, correspondant préférentiellement à une sphère ayant un diamètre inclus dans la plage de 8 à 12 mm, préférentiellement de 9 à 11 mm, et un rayon R5.

12. Dispositif d'emballage selon n'importe laquelle des revendications précédentes, dans lequel le dessus d'un élévateur d'oeuf est pourvu d'une surface inclinée, ayant préférentiellement une pente incluse dans la plage de 20 à 40 degrés, plus préférentiellement de 25 à 35 degrés.
